Europäisches Patentamt

European Patent Office

Office européen des brevets

(19)

(11) Numéro de publication : **0 369 357 B1**

## (12) FASCICULE DE BREVET EUROPEEN

(45) Date de publication du fascicule du brevet :
**13.05.92 Bulletin 92/20**

(21) Numéro de dépôt : **89120928.0**

(22) Date de dépôt : **11.11.89**

(51) Int. Cl.⁵ : $G01G\ 15/00$, $G01F\ 25/00$, $G05D\ 7/06$

(54) **Procédé et système de régulation d'une machine à remplir.**

(30) Priorité : **17.11.88 FR 8814936**

(43) Date de publication de la demande :
**23.05.90 Bulletin 90/21**

(45) Mention de la délivrance du brevet :
**13.05.92 Bulletin 92/20**

(84) Etats contractants désignés :
**AT BE CH DE ES FR GB GR IT LI LU NL SE**

(56) Documents cités :
**DE-B- 1 231 916**
**FR-A- 2 142 655**
**US-A- 2 697 580**
**US-A- 4 696 329**

(73) Titulaire : **SOCIETE DES PRODUITS NESTLE S.A.**
**Case postale 353**
**CH-1800 Vevey (CH)**

(72) Inventeur : **Kumer, Marius**
**148, Avenue Ampère**
**F-94500 Arnouville-les-Gonesse (FR)**

Jouve, 18, rue Saint-Denis, 75001 PARIS

## Description

L'invention se rapporte à un procédé de régulation d'une machine à remplir à dosage volumétrique en fonction de pesées d'emballages remplis sortant de cette machine, dans lequel on calcule une moyenne de poids sur un échantillon de pesées d'effectif donné, on teste si cette moyenne est comprise dans une fourchette donnée centrée sur une quantité visée, et on recommence si c'est le cas, tandis que dans le cas contraire on déplace une consigne de dosage de la machine à remplir d'une quantité égale au produit d'un facteur de conversion par la différence quantité visée moins moyenne calculée, avant de recommencer les étapes de calcul de moyenne et de test.

Ce facteur de conversion est primordial pour avoir une bonne régulation. S'il est inadapté, on corrige en visant à côté du point à atteindre, c'est-à-dire qu'on amène la consigne de réglage à proximité des bornes de la fourchette, ou même à l'extérieur de celle-ci, et par conséquent on en sort plus facilement, on corrige plus souvent, et en définitive on augmente la dispersion du dosage, ce qui conduit à réaliser un surdosage systématique pour rester dans les limites fixées par la législation.

Or, le facteur de conversion correspond essentiellement au volume massique du produit dont on remplit les emballages, qui varie souvent dans des proportions relativement importantes au cours du temps, il suffit en effet qu'une ou plusieurs des caractéristiques physiques du produit (viscosité, densité, granulométrie, température,...) varient légèrement, tout en restant dans les normes de qualité prévues, pour que le facteur de conversion devienne inadapté. On est donc très couramment obligé de surdoser.

L'invention vise à palier cet inconvénient.

Elle propose que, lorsque l'on a déplacé la consigne de dosage et calculé une nouvelle moyenne de pesées, on calcule le rapport entre, d'une part, la différence : moyenne calculée avant déplacement moins moyenne calculée après déplacement et, d'autre part, la différence : moyenne calculée avant déplacement moins quantité visée ; et que, lorsque l'on a déjà calculé au moins un nombre prédéterminé desdits rapports, on calcule leur moyenne, on teste si celle-ci est comprise dans une fourchette centrée sur la valeur 1, et si ce n'est pas le cas, on divise ledit facteur de conversion par la moyenne desdits rapports, et on recommence comme si on avait encore calculé aucun desdits rapports.

Le facteur de conversion n'est donc plus fixe, il s'ajuste au contraire automatiquement en fonction des résultats précédemment obtenus, par une sorte de règle de trois que l'on applique qu'après s'être assurés que le rapport : correction effective sur correction désirée est significativement, au sens des statistiques, différent de 1.

L'invention offre l'avantage, en réduisant la dispersion de dosage, de permettre la suppression ou pur le moins la réduction des surdosages, et donc de réaliser des économies qui peuvent être particulièrement importantes dans certaines circonstances.

En outre, elle permet d'éviter d'avoir à mesurer le facteur de conversion - ou le volume massique du produit -, on peut simplement partir d'une valeur arbitraire, qui sera automatiquement transformée en la valeur convenable.

Les caractéristiques, particularités et avantages de l'invention, apparaîtront au cours de la description d'un mode particulier de réalisation qui va suivre, faite en regard des dessins annexés, sur lesquels :
– la figure 1 illustre schématiquement une machine à remplir à dosage volumétrique, une trieuse pondérale des emballages remplis sortant de la machine, et un système de régulation réagissant en fonction des données fournies par le dispositif de pesage de la trieuse, en émettant un signal de correction vers la machine à remplir pour déplacer sa consigne de dosage ;
– la figure 2 est un organigramme illustrant le procédé de régulation connu dans le système de la figure 1;
– la figure 3 est un chronogramme montrant comment se déroule cette régulation ;
– la figure 4 est un organigramme illustrant une mise en oeuvre du procédé de régulation selon l'invention ;
– et la figure 5 est un chronogramme similaire à celui de la figure 3, si celui-ci était pivoté de 90°, pour une régulation réalisée selon l'organigramme de la figure 4, les valeurs moyennes étant seules représentées, la partie droite de cette figure illustrant le déroulement de l'organigramme de la figure 4.

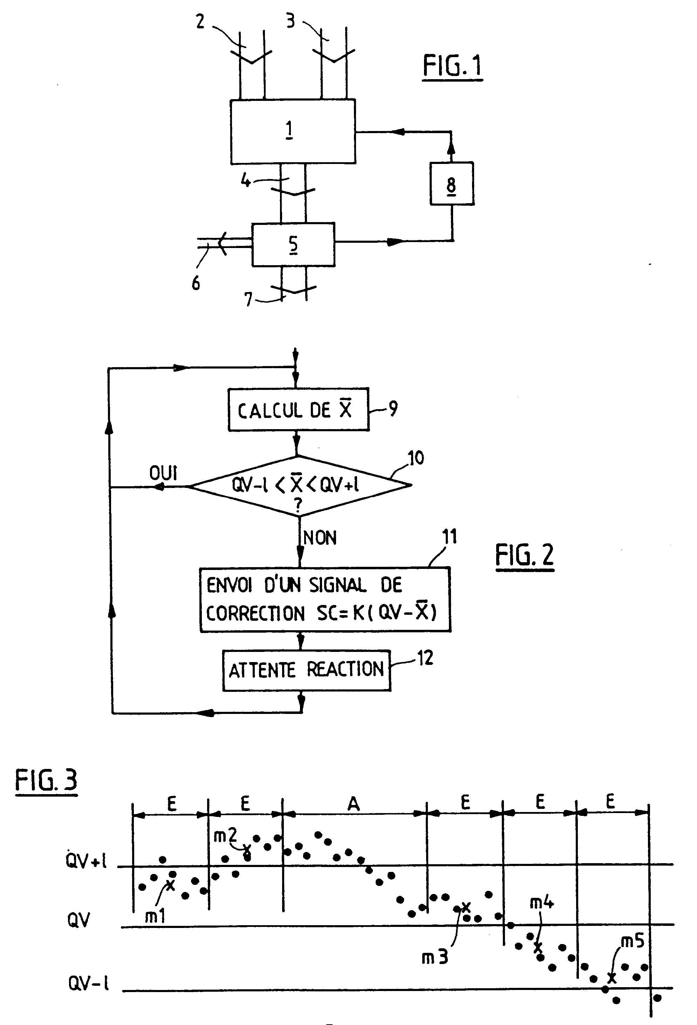

On voit sur la figure 1 une machine à remplir 1 à laquelle arrivent un flux 2 de produit à emballer et un flux 3 d'emballages vides, et de laquelle sort un flux 4 d'emballages remplis. La machine 1 est à dosage volumétrique, c'est-à-dire qu'elle remplit les emballages d'un volume correspondant à une consigne qu'on lui a fixée, mais comme c'est en fait un poids de produit que l'on doit doser, le flux d'emballage rempli passe par une trieuse pondérale 5 qui comporte un dispositif de pesage et des moyens pour diriger les emballages incorrectement remplis vers un flux 6 d'emballages incorrects, tandis que les autres poursuivent leur progression dans un flux d'emballages corrects 7.

Un système de régulation 8 est relié à la trieuse pondérale pour recevoir des données de pesées fournies par son dispositif de pesage, ainsi qu'à la machine à remplir, vers laquelle elle émet en cas de besoin un signal de correction pour déplacer la consigne de dosage.

On connait déjà un tel système de régulation (appareil EWK 446 de la Société BOEKELS), qui comporte une unité de traitement fonctionnant selon un programme illustré par l'organigramme de la figure 2.

On commence par une séquence de calcul 9 dans laquelle on détermine une moyenne de poids $\overline{X}$ sur un échantillon d'effectif donné, en général sept emballages, puis on passe à un test 10 où on regarde si cette moyenne $\overline{X}$ est comprise dans une fourchette donnée centrée sur une quantité visée QV et d'amplitude 21, si c'est le cas, on recommence directement tandis que dans le cas contraire, on passe à une étape 11 où l'on déplace une consigne de dosage de la machine à remplir d'une quantité égale au produit d'un facteur de conversion K par la différence : quantité visée QV moins moyenne calculée $\overline{X}$, ici en envoyant un signal de correction SC à un vernier de réglage de la consigne de volume de la machine 1, qui fait tourner ce vernier dans un sens ou dans l'autre en fonction du signe de SC, pendant un temps en fonction de la valeur absolue de SC ; puis dans une étape 12 on attend que se passe la réaction, c'est-à-dire que les emballages remplis suivant la nouvelle consigne arrivent à la trieuse 5, puis on recommence à partir de la séquence 9.

La figure 3 illustre le déroulement de ce procédé de régulation : en abscisse on a le temps tandis qu'en ordonnée on a une échelle de poids, où sont indiquées les limites QV -1 et QV +1 de la fourchette permise centrée sur la quantité visée QV, les pesées successives étant indiquées par des points tandis que les valeurs moyennes sur les échantillons E de sept pesées successives sont indiquées par des croix.

La première valeur moyenne calculée, m1, était à l'intérieur de la fourchette permise, on a donc directement procédé au calcul de la deuxième valeur m2 sur l'échantillon suivant, puis on a constaté qu'elle était en- dehors de la fourchette, on a donc corrigé la consigne de la machine 1 et attendu pendant un temps A correspondant à quatorze emballages, que se fasse la réaction, puis on a calculé la valeur moyenne suivante m3, qui était dans l'intervalle, et donc directement la valeur m4 puis directement la valeur m5, m4 étant dans l'intervalle ; et ainsi de suite.

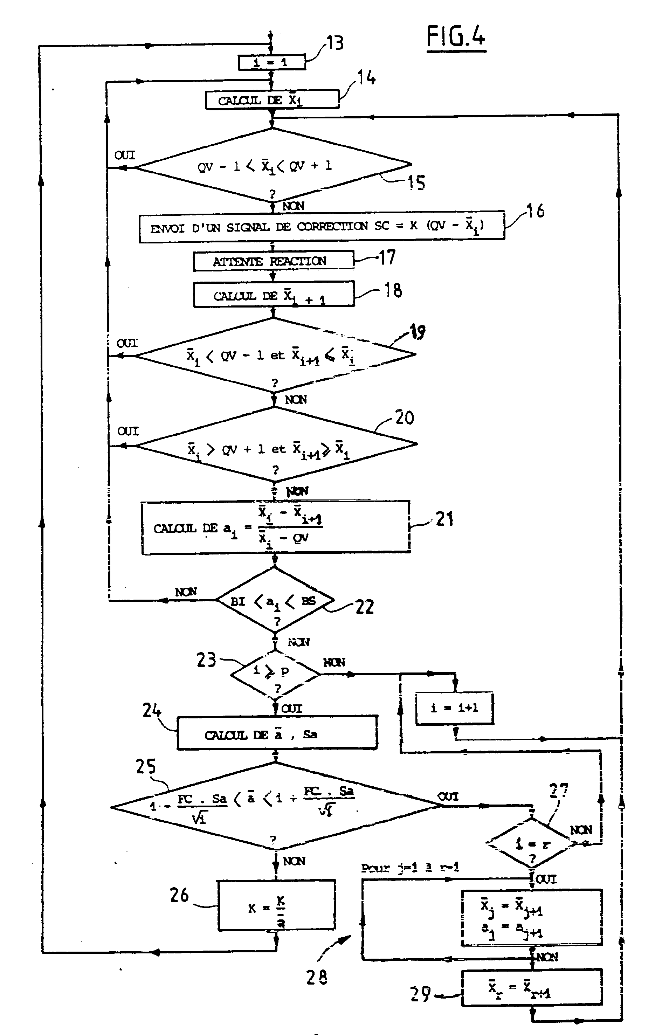

La figure 4 donne un exemple d'organigramme suivant lequel on peut faire se dérouler le procédé selon l'invention, notamment par le système 8 sans la commande d'un programme.

Dans une première étape 13, on initialise à 1 un indice i, puis on calcule la moyenne des pesées $\overline{X}_i$ dans une étape 14 similaire à l'étape 9, avec ensuite un test 15 similaire au test 10 à la suite duquel soit on calcule directement une nouvelle moyenne $\overline{X}_i$ (sans changer i), soit on passe à des étapes 16 et 17 similaires aux étapes 11 et 12, puis on calcule une nouvelle moyenne de pesée $\overline{X}_{i+1}$ dans une étape 18, on passe par des tests 19 et 20 prévus pour éliminer des valeurs aberrantes, qui seront expliqués par la suite puis, conformément a l'invention, on passe à une étape 21 où on calcule le rapport entre, d'une part, la différence : moyenne calculée avant déplacement $\overline{X}_i$-moyenne calculée après déplacement $\overline{X}_{i+1}$ et, d'autre part, la différence moyenne calculée avant déplacement $\overline{X}_i$-quantité visée QV ; puis après être passé par un test 22 prévu aussi pour éliminer les valeurs aberrantes, qui sera également expliqué par la suite, on passe à un test 23 où l'on regarde si l'incide i est au moins égal à un nombre prédéterminé p, par exemple égal à 5, c'est-à-dire qu'on regarde si l'on a déjà calculé au moins ce nombre de rapports $a_i$, si ce n'est pas le cas on incrémente i d'une unité et on recommence au test 15, la séquence reprenant avec la moyenne calculée précédemment dans l'étape 18 ; et si on a déjà calculé au moins p rapports $a_i$, on calcule leur moyenne $\overline{a}$ dans une étape 24, puis dans un test 25 on regarde si $\overline{a}$ est compris dans une fourchette centrée sur la valeur 1, si ce n'est pas le cas on passe à une étape 26 où on divise le facteur de conversion K par $\overline{a}$, et on recommence à l'étape d'initialisation 13, c'est-à-dire comme si on n'avait calculé aucun des rapports ai, et si $\overline{a}$ était compris dans la fourchette, on passe à un test 27, qui sera expliqué par la suite, et si le résultat de celui-ci est non, on poursuit de la même façon qu'après un résultat: non du test 23.

Selon une caractéristique préférée de l'invention, afin d'avoir des résultats significatifs au sens des statistiques, la fourchette faisant l'objet du test 25 correspond à un intervalle de confiance centré sur la valeur 1, c'est-à-dire que son amplitude de part et d'autre de cette valeur est égale au produit d'un facteur de confiance FC et de l'écart type $S_a$ des rapports $a_i$, que l'on a calculés dans l'étape 24 en même temps que la moyenne $\overline{a}$, divisé par la racine carrée du nombre de rapports, c'est-à-dire i. Le facteur de confiance FC est choisi en fonction des circonstances, il est par exemple égal à 2,58 si l'on a choisi un intervalle de confiance à 99%.

Les tests 19 et 20 correspondent à une autre caractéristique préférée de l'invention, selon laquelle on teste si la nouvelle moyenne de pesées calculée $\overline{X}_{i+1}$ est à l'extérieur et du même côté, par rapport à la fourchette centrée sur la quantité visée, que la moyenne précédante $\overline{X}_i$, et si dans ce cas $\overline{X}_{i+1}$ est plus éloigné de la fourchette que $\overline{X}_i$ ; et dans ce cas on ne prend pas en compte $\overline{X}_{i+1}$, qui correspond à une aberration : on recommence directement à l'étape 14, sans avoir incrémenté i.

De même, on réalise de préférence le test 22 après le calcul de $a_i$ pour vérifier si ce rapport est bien compris entre des bornes inférieure BI et supérieure BS au-delà desquelles $a_i$ serait considéré comme aberrant, et on ne le prend pas en compte s'il est au-delà de ces bornes, en recommençant de la même façon à l'étape 14. A titre d'exemple on peut choisir 0,25 pour BI et 2,50 pour BS.

On notera qu'on aurait pu réaliser les tests 19 et 20 après l'étape 21, et qu'on aurait de même recommencé à l'étape 14 si $\overline{X}_{i+1}$ s'était avéré aberrant.

Selon une autre caractéristique préférée de l'invention, destinée à éviter de prendre en compte des pesées trop anciennes, on réalise le test 27 pour regarder si l'on a déjà calculé plus d'un nombre prédéterminé r, par exemple 20, de rapport $a_i$, et dans ce cas on passe par la boucle 28 et l'étape 29 dans laquelle on met dans $\overline{X}_1$ à $\overline{X}_r$ les anciennes valeurs de $\overline{X}_2$ à $\overline{X}_{r+1}$, et dans $a_1$ à $a_{r-1}$ les anciennes valeurs de $a_2$ à $a_r$, puis on recommence avec i restant à r, c'est-à-dire qu'on limite le nombre de valeurs différentes de $a_i$ prises en compte à r, en éliminant la valeur de $a_i$ la plus ancienne après chaque nouveau calcul de $a_i$ où celui-ci reste dans l'intervalle de confiance.

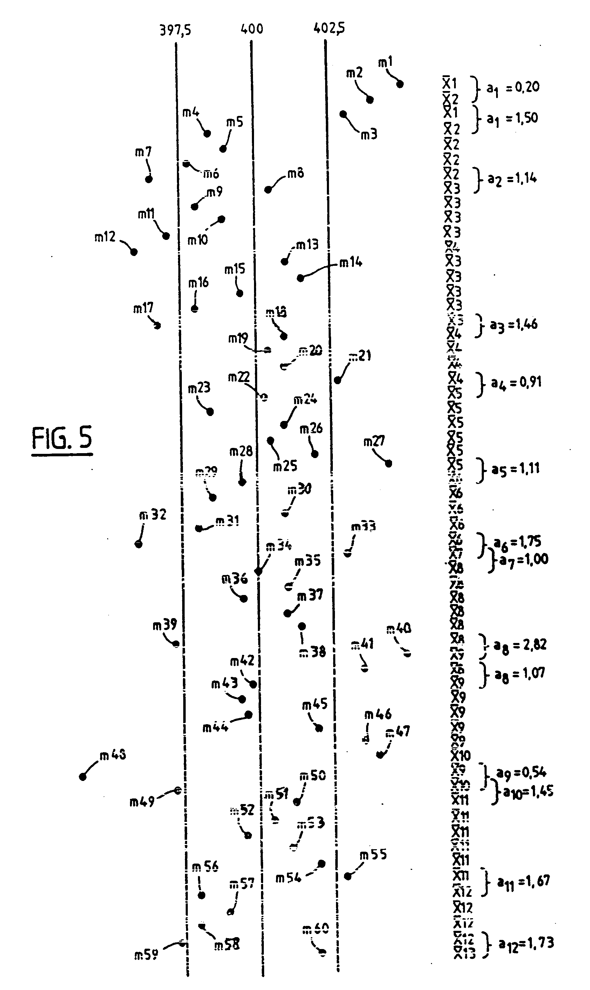

Sur la figure 5, la quantité visée QV est égale à 400g et le demi-intervalle 1 à 2,5g, et on a représenté 60 moyennes consécutives m1 à m60, le temps d'attente étant égal au temps d'échantillonnage.

m1 a été considéré en tant que $\overline{X}_1$ suivant l'organigramme de la figure 4, et comme il était en-dehors de l'intervalle permis, on a envoyé un signal de correction puis calculé $\overline{X}_2$, qui correspond à m2, on est passé à travers les tests 19 et 20, puis on a calculé $a_1$, qui s'est trouvé égal à 0,20, ce qui fait qu'on est sorti du test 22 par la branche : non, et par conséquent on a directement recommencé à l'étape 14, ce qui fait que m3 a été considéré comme $\overline{X}_1$ et m2 comme $\overline{X}_2$, on est passé à travers les tests 19, 20 et 22, comme i était alors égal à 1, on est sorti par la branche : non du test 23, i est passé à 2 et l'on a poursuivi.

On a calculé $a_2$ pour m7 et m8, le $\overline{X}_4$ correspondant à m12 n'a pas été pris en compte car l'on est alors sorti par la branche : non du test 19, on a calculé $a_3$ pour m17 et m18, $a_4$ pour m21 et m22 puis $a_5$ pour m27 et m28.

On est alors sorti par la branche : oui du test 23 (p étant égal à 5), et on a alors eu $\overline{a} = 1,22$ et son écart type $S_a = 0,25$ ; $\overline{a}$ était donc dans l'intervalle de confiance à 99% et l'on est sorti par la branche : oui du test 25.

On a ensuite calculé $a_6$ pour m32 et m33, et $\overline{a}$ est resté dans l'intervalle de confiance, $a_7$ pour m33 et m34 et $\overline{a}$ est resté dans l'intervalle de confiance, et ainsi de suite jusqu'au calcul de $a_{12}$ pour m59 et m60, ou l'on a eu $\overline{a} = 1,28$ et $S_a$ égal à 0,37, $\overline{a}$ dépassait alors la valeur supérieure 1,276 de l'intervalle de confiance, on est donc sorti du test 25 par la branche : non, et on a divisé K par $\overline{a}$, avant de remettre i à 1, c'est-à-dire de tout reprendre depuis le début.

On notera que pour m39 et m40, on n'a pas pris en compte les $\overline{X}_9$ et $a_8$ correspondants, car $a_8$ était au-delà de la limite BS fixée à 2,50 ; et qu'on n'a pas non plus pris en compte $\overline{X}_{10}$ pour m47, du fait du test 20.

## Revendications

1. Procédé de régulation d'une machine à remplir à dosage volumétrique (1) en fonction de pesées d'emballages remplis sortant de cette machine, dans lequel on calcule une moyenne de poids sur un échantillon de pesées d'effectif donné, on teste si cette moyenne est comprise dans une fourchette donnée centrée sur une quantité visée (QV) et on recommence si c'est le cas, tandis que dans le cas contraire, on déplace une consigne de dosage de la machine à remplir d'une quantité égale au produit d'un facteur de conversion (K) par la différence quantité visée moins moyenne calculée, avant de recommencer les étapes de calcul de moyenne et de test ; caractérisé en ce que, lorsqu'on a déplacé la consigne de dosage et calculé une nouvelle moyenne de pesée ($X_{i+1}$), on calcule le rapport ($a_i$) entre, d'une part, la différence : moyenne calculée avant déplacement ($X_i$) moins moyenne calculée après déplacement ($X_{i+1}$) et, d'autre part, la différence : moyenne calculée avant déplacement ($X_i$) moins quantité visée (QV) ; et en ce que, lorsqu'on a déjà calculé au moins un nombre prédéterminé (p) desdits rapports, on calcule leur moyenne (a), on teste si celle-ci est comprise dans une fourchette centrée sur la valeur 1 et si ce n'est pas le cas, on divise ledit facteur de conversion (K) par la moyenne (a) desdits rapports, et on recommence comme si on n'avait encore calculé aucun desdits rapports.

2. Procédé selon la revendication 1, caractérisé en ce que ladite fourchette centrée sur la valeur 1 correspond à un intervalle de confiance, c'est-à-dire que son amplitude de part et d'autre de la valeur 1 est égale au produit d'un facteur de confiance (FC) par l'écart type (Sa) desdits rapports, divisé par la racine carrée du nombre de rapports (i).

3. Procédé selon l'une quelconque des revendications 1 ou 2, caractérisé en ce que, après avoir déplacé la consigne de poids et calculé une nouvelle moyenne de pesée ($X_{i+1}$), on teste si celle-ci est à l'extérieur et du même côté, par rapport à la fourchette centrée sur la quantité visée, que la moyenne précédente ($X_i$) ; dans ce cas, on teste si la nouvelle moyenne est plus éloignée de ladite fourchette que la moyenne précédente; et dans ce cas on ne calcule pas ledit rapport ($a_i$) ou, s'il est déjà calculé, on ne le prend pas en compte.

4. Procédé selon l'une quelconque des revendications 1 à 3, caractérisé en ce que, après avoir calculé ledit rapport ($a_i$), on teste s'il est compris entre une borne inférieure (B1) et une borne superieure (BS) préfixées, et s'il ne l'est pas, on ne le prend pas en compte.

5. Procédé selon l'une quelconque des revendications 1 à 4, caractérisé en ce que, lorsqu'on a calculé plus d'un nombre (r) prédéterminé desdits rapports ($a_i$), on ne prend en compte que ce nombre prédéterminé des derniers rapports calculés.

6. Procédé selon l'une quelconque des revendications 1 à 5, caractérisé en ce que ledit nombre prédéterminé (p) au-delà duquel on calcule la moyenne desdits rapports (a$_i$) est égal à 5, et en ce que ledit nombre prédéterminé (r) de rapports au-delà duquel on ne prend en compte que les derniers rapports calculés, est égal à 20.

7. Système de régulation d'une machine à remplir à dosage volumétrique (1), destiné à réagir en fonction de données de pesées fournies par un dispositif de pesage des emballages remplis sortant de la machine, et à émettre un signal de correction vers la machine à remplir pour déplacer une consigne de dosage ; comportant une unité de traitement pour la mise en oeuvre du procédé selon l'une quelconque des revendications 1 à 6.

8. Système selon la revendication 7, caractérisé en ce que l'unité de traitement met en oeuvre ledit procédé dans le cadre d'un programme de commande.

## Patentansprüche

1. Verfahren zum Regeln einer Volumendosier-Füllmaschine (1) in Abhängigkeit von Wägungen gefüllter, diese Maschine verlassender Verpackungen, wobei der Gewichtsdurchschnitt einer Probe von Wäge-Istwerten berechnet und geprüft wird, ob dieser Durchschnitt in einem gegebenen Bereich liegt, der um einen Sollwert (QV) zentriert ist, und von neuem begonnen wird, wenn dies der Fall ist, wogegen im entgegengesetzten Fall ein Dosier-Einstellwert der Füllmaschine um einen Wert verändert wird, der gleich dem Produkt aus einem Umwandlungsfaktor (K) und der Differenz zwischen Sollwert und berechnetem Durchschnitt ist, bevor die Durchschnittsberechnungs- und Überprüfungsschritte wiederbegonnen werden; dadurch gekennzeichnet, daß nach der Veränderung des Dosier-Einstellwertes und der Berechnung eines neuen Wägedurchschnittes (X$_{i+1}$) das Verhältnis (a$_i$) zwischen einerseits der Differenz aus berechnetem Durchschnitt vor Veränderung (X$_i$) minus berechnetem Durchschnitt nach Veränderung (X$_{i+1}$) und anderseits der Differenz aus berechnetem Durchschnitt vor Veränderung (X$_i$) minus Sollwert (QV) berechnet wird; und daß nach der Berechnung zumindest einer vorgegebenen Anzahl (p) solcher Verhältnisse deren Durchschnitt (a) berechnet und geprüft wird, ob er in einem Bereich liegt, der um den Wert 1 zentriert ist, und wenn dies nicht der Fall ist, der Umwandlungsfaktor (K) durch den Durchschnitt (a) dieser Verhältnisse dividiert und von neuem begonnen wird, so als ob noch keines dieser Verhältnisse berechnet worden wäre.

2. Verfahren nach Anspruch 1, dadurch gekennzeichnet, daß der um den Wert 1 zentrierte Bereich einem Vertrauensintervall entspricht, d.h. daß seine Amplitude zur einen und zur anderen Seite des Wertes 1 gleich dem Produkt aus einem Vertrauensfaktor (FC) und der typischen Abweichung (Sa) der genannten Verhältnisse dividiert durch die Quadratwurzel der Anzahl von Verhältnissen (i) ist.

3. Verfahren nach Anspruch 1 oder 2, dadurch gekennzeichnet, daß nach der Veränderung des Gewichts-Einstellwertes und der Berechnung eines neuen Wägedurchschnittes (X$_{i+1}$) geprüft wird, ob letzterer bezüglich des auf dem Sollwert zentrierten Bereiches außerhalb und auf derselben Seite wie der vorhergehende Durchschnitt (X$_i$) liegt; in diesem Fall wird geprüft, ob der neue Durchschnitt von diesem Bereich weiter entfernt ist als der vorhergehende Durchschnitt; und in diesem Fall wird das genannte Verhältnis (a$_i$) nicht berechnet, oder, wenn es bereits berechnet worden ist, nicht berücksichtigt.

4. Verfahren nach einem der Ansprüche 1 bis 3, dadurch gekennzeichnet, daß nach der Berechnung des genannten Verhältnisses (a$_i$) geprüft wird, ob es zwischen einer festgelegten unteren Grenze (B1) und einer festgelegten oberen Grenze (BS) liegt, und wenn dies nicht der Fall ist, wird es nicht berücksichtigt.

5. Verfahren nach einem der Ansprüche 1 bis 4, dadurch gekennzeichnet, daß nach der Berechnung von mehr als einer vorgegebenen Anzahl (r) der genannten Verhältnisse (a$_i$) nur diese vorgegebene Anzahl von zuletzt berechneten Verhältnissen berücksichtigt wird.

6. Verfahren nach einem der Ansprüche 1 bis 5, dadurch gekennzeichnet, daß die vorgegebene Anzahl (p), oberhalb welcher der Durchschnitt der Verhältnisse (a$_i$) berechnet wird, gleich 5 ist, und daß die vorgegebene Anzahl (r) von Verhältnissen, oberhalb welcher nur die zuletzt berechneten Verhältnisse berücksichtigt werden, gleich 20 ist.

7. Regelsystem für eine Volumendosier-Füllmaschine (1), das dazu bestimmt ist, in Abhängigkeit von Wägedaten zu reagieren, welche von einer Wägeeinrichtung der gefüllten, die Maschine verlassenden Verpackungen geliefert werden, und das dazu bestimmt ist, ein Korrektursignal zur Füllmaschine zu senden, um einen Dosier-Einstellwert zu verändern; mit einer Verarbeitungseinheit zur Ausführung des Verfahrens nach einem der Ansprüche 1 bis 6.

8. System nach Anspruch 7, dadurch gekennzeichnet, daß die Verarbeitungseinheit das Verfahren im Rahmen eines Steuerprogrammes ausführt.

## Claims

1. A method for regulating a filling machine with volumetric dosing (1) in dependence upon the weighing of filled containers issuing from the machine, in which an average weight is calculated from a sample weighing of given value, this average is tested to determine whether it lies within a given range centred on a target quantity (QV) and, if it does, the process is recommenced whereas, in the opposite case, a set dosing value of the filling machine is displaced by an amount equal to the product of a conversion factor (K) times the difference between the target quantity and the calculated quantity before the average calculation and test steps are recommenced, characterized in that, when the set dosing value has been displaced and a new weighing average ($X_{i+1}$) has been calculated, the ratio ($a_i$) between, on the one hand, the difference: average calculated before displacement ($X_i$) minus average calculated after displacement ($X_{i+1}$) and, on the other hand, the difference: average calculated before displacement ($X_i$) minus the target quantity (QV) is calculated; and in that, when at least a predetermined number (p) of said ratios has already been calculated, their average (a) is calculated and tested to determine whether it lies within a range centred on the value 1 and, if this is not the case, the said conversion factor (K) is divided by the average (a) of the said ratios and the process is recommenced as if none of said ratios had been calculated.

2. A method as claimed in claim 1, characterized in that the range centred on the value 1 corresponds to a confidence interval, i.e. its amplitude on either side of the value 1 is equal to the product of a confidence factor (FC) times the standard deviation (Sa) of said ratios divided by the square root of the number of ratios (i).

3. A method as claimed in claim 1 or 2, characterized in that, after the set weight has been displaced and a new weighing average ($X_{i+1}$) has been calculated, this average is tested to determine whether it is outside and on the same side - in relation to the range centred on the target quantity - as the preceding average ($X_i$); in this case, the new average is tested to determine whether it is further from said range than the preceding average; and in this case the said ratio ($a_i$) is not calculated or, if it has already been calculated, it is disregarded.

4. A method as claimed in any of claims 1 to 3, characterized in that, after said ratio ($a_i$) has been calculated, it is tested to determine whether it is between a preset lower limit (B1) and a preset upper limit (BS) and, if it is not, it is disregarded.

5. A method as claimed in any of claims 1 to 4, characterized in that, when more than a predetermined number (r) of said ratios ($a_i$) has been calculated, only this predetermined number of the last calculated ratios is taken into account.

6. A method as claimed in any of claims 1 to 5, characterized in that the said predetermined number (p) beyond which the average of said ratios ($a_i$) is calculated is five and in that the said predetermined number (r) of ratios beyond which only the last calculated ratios are taken into account is twenty.

7. A system for regulating a filling machine with volumetric dosing (1) intended to respond in dependence upon weighing data supplied by an arrangement for weighing the filled containers issuing from the machine and to emit a correction signal to the filling machine to displace a set dosing value; comprising a processing unit for carrying out the method claimed in any of claims 1 to 6.

8. A system as claimed in claim 7, characterized in that the processing unit uses said method in a control program.

FIG.1

CALCUL DE $\overline{X}$ — 9

OUI — $QV-l < \overline{X} < QV+l$ ? — 10

NON

ENVOI D'UN SIGNAL DE CORRECTION $SC = K(QV-\overline{X})$ — 11

ATTENTE REACTION — 12

FIG.2

FIG.3

## FIG.4

13 — $i = 1$

14 — CALCUL DE $\bar{X}_i$

15 — $QV - 1 < \bar{X}_i < QV + 1$ ?    OUI / NON

16 — ENVOI D'UN SIGNAL DE CORRECTION $SC = K (QV - \bar{X}_i)$

17 — ATTENTE REACTION

18 — CALCUL DE $\bar{X}_{i+1}$

19 — $\bar{X}_i < QV - 1$ et $\bar{X}_{i+1} \leqslant \bar{X}_i$ ?    OUI / NON

20 — $\bar{X}_i > QV + 1$ et $\bar{X}_{i+1} \geqslant \bar{X}_i$ ?    OUI / NON

21 — CALCUL DE $a_i = \dfrac{\bar{X}_i - \bar{X}_{i+1}}{\bar{X}_i - QV}$

22 — $BI < a_i < BS$ ?    NON / NON

23 — $i \geqslant P$ ?    NON / OUI

$i = i+1$

24 — CALCUL DE $\bar{a}$ , Sa

25 — $1 - \dfrac{FC \cdot Sa}{\sqrt{i}} < \bar{a} < 1 + \dfrac{FC \cdot Sa}{\sqrt{i}}$ ?    OUI / NON

27 — $i = r$ ?    NON / OUI

Pour $j=1$ à $r-1$

$\bar{X}_j = \bar{X}_{j+1}$

$a_j = a_{j+1}$

NON

26 — $K = \dfrac{K}{\bar{a}}$

28

29 — $\bar{X}_r = \bar{X}_{r+1}$

8

FIG. 5